(19) 

**Europäisches Patentamt**
**European Patent Office**
**Office européen des brevets**

(11) **EP 4 156 769 B1**

(12) **EUROPEAN PATENT SPECIFICATION**

(45) Date of publication and mention
of the grant of the patent:
**16.07.2025 Bulletin 2025/29**

(21) Application number: **21809371.4**

(22) Date of filing: **21.05.2021**

(51) International Patent Classification (IPC):
*H04W 28/02* (2009.01)   *H04W 36/22* (2009.01)
*H04W 36/00* (2009.01)   *H04W 72/12* (2023.01)

(52) Cooperative Patent Classification (CPC):
**H04W 28/0289; H04W 36/00692; H04W 72/12;**
H04W 36/22

(86) International application number:
**PCT/CN2021/095240**

(87) International publication number:
**WO 2021/233435 (25.11.2021 Gazette 2021/47)**

(54) **LOAD ADJUSTMENT METHOD, SERVER AND STORAGE MEDIUM**

LASTANPASSUNGSVERFAHREN, SERVER UND SPEICHERMEDIUM

PROCÉDÉ DE RÉGLAGE DE CHARGE, SERVEUR ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2020   CN 202010444412**

(43) Date of publication of application:
**29.03.2023   Bulletin 2023/13**

(73) Proprietor: **ZTE Corporation**
**Shenzhen, Guangdong   518057 (CN)**

(72) Inventors:
• **ZENG, Zhaohua**
**Shenzhen, Guangdong 518057 (CN)**

• **ZHAN, Yong**
**Shenzhen, Guangdong 518057 (CN)**

(74) Representative: **Iannone, Carlo Luigi et al**
**Barzanò & Zanardo S.p.A.**
**Via Borgonuovo, 10**
**20121 Milano (IT)**

(56) References cited:
**EP-A1- 2 941 044        CN-A- 104 301 948**
**CN-A- 105 873 132        CN-A- 107 333 300**
**CN-A- 111 093 229        CN-A- 111 225 417**
**US-A1- 2019 159 094**

EP 4 156 769 B1

**EP 4 156 769 B1**

## Description

TECHNICAL FIELD

The present application relates to the field of communications, for example, a load adjustment method, a server and a storage medium.

BACKGROUND

Massive Multiple-Input-Multiple-Output (MIMO) (which is also referred to as large scale MIMO) may simultaneously communicate with multiple users on the same time-frequency resource by configuring hundreds or thousands of antenna arrays at a base station side, thus greatly improving the spectrum efficiency, and the massive MIMO is a key technology for improving system capacity and Spectrum Efficiency (SE) in the 5th Generation Mobile Networks (5G). Without an increase in system bandwidth, base stations or cells, massive MIMO cells can exhibit a traffic gain several times higher than that of conventional macro stations by virtue of beamforming and multi-user spatial division pairing capabilities of the massive MIMO.

However, some massive MIMO cells cannot well perform the beamforming and multi-user spatial division pairing capabilities of the massive MIMO, resulting in a limited improvement in traffic of the massive MIMO cells.

EP 2 941 044 A1 relates to a load balancing method.

CN 105 873 132 A discloses a method for carrying out load balancing.

SUMMARY

Embodiments of the present application provide a load adjustment method, a server and a storage medium, providing a possibility to improve the traffic of a massive MIMO cell.

The present invention is defined by the appended set of claims.

BRIEF DESCRIPTION OF DRAWINGS

FIG. 1 is a flowchart of a load adjustment method according to first embodiment of the present application;

FIG. 2 is a flowchart of determining a first user or a second user in the first embodiment of the present application;

FIG. 3 is a flowchart of a load adjustment method according to second embodiment of the present application;

FIG. 4 is a flowchart of an implementation of step 204 in the second embodiment of the present application;

FIG. 5 is a flowchart of a load adjustment method according to third embodiment of the present application;

FIG. 6 is a flowchart of an implementation of step 305 in the third embodiment of the present application; and

FIG. 7 is a structural diagram of a server according to fourth embodiment of the present application.

DETAILED DESCRIPTION

Embodiments of the present application are described in detail in conjunction with the drawings.

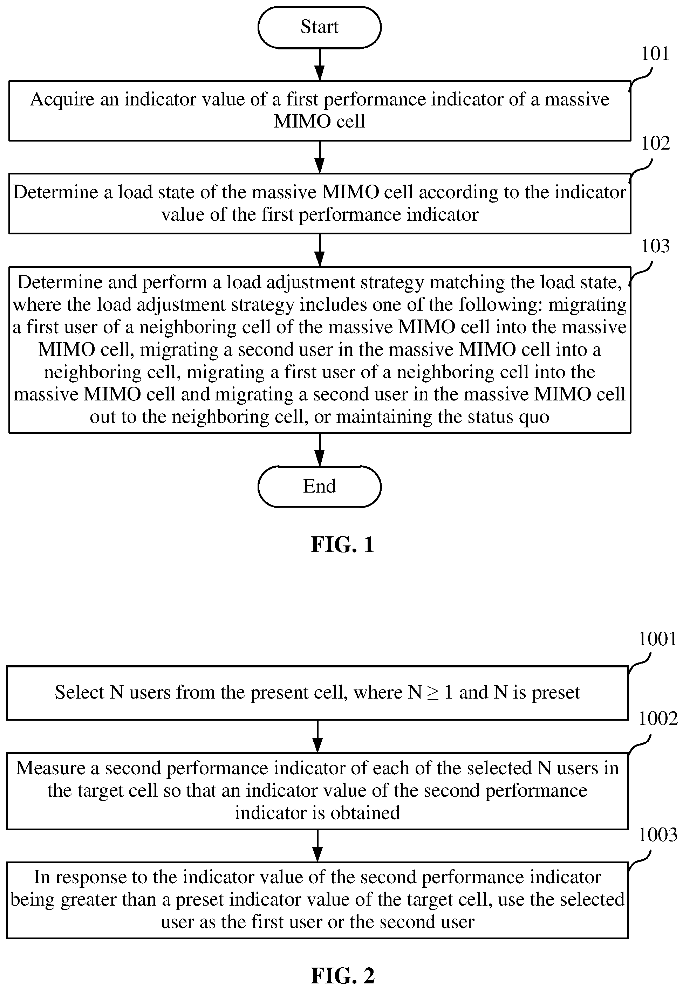

First embodiment of the present application relates to a load adjustment method. The load adjustment method may be applied to a device, for example, a base station. The flow is shown in FIG. 1 and includes steps described below.

In step 101, an indicator value of a first performance indicator of a massive MIMO cell is acquired.

The device may automatically acquire the indicator value of the first performance indicator of the massive MIMO cell within the latest preset time period, and the preset time period may be set according to actual requirements. For example, the preset time period is 15 minutes. A triggering event may also be preset in the device. When the triggering event occurs, the indicator value of the first performance indicator of the massive MIMO cell is acquired. The first performance indicator may be one type of performance indicator. For example, the first performance indicator is a Physical Resource Block (PRB) utilization. The first performance indicator may also be multiple types of performance indicators, and then indicator values of the multiple types of performance indicators are acquired, respectively. For example, the first performance indicator includes the PRB utilization, Control Channel Element (CCE) power and a CCE position utilization, and then the indicator value of the PRB utilization, the indicator value of the CCE power and the indicator value of the CCE position utilization are acquired, respectively.

In step 102, a load state of the massive MIMO cell is determined according to the indicator value of the first performance indicator.

In an example, different load states of the massive MIMO cell may be represented as a relatively idle state, a relatively busy state and a congestion state. In both the relatively idle state and the relatively busy state, no congestion situation occurs, and in the congestion state, a congestion situation occurs. In an example, different load states of the massive MIMO cell may also be represented numerically, different numerical values characterize different load states. It may be predefined that the larger the numerical value is, the busier the massive MIMO cell is. The largest numerical value characterizes that the congestion situation occurs, the smallest numerical value characterizes that no congestion situation occurs and the massive MIMO cell is relatively idle, and other numerical values characterize that no congestion situation occurs and the massive MIMO cell is relatively busy. For example, cases where s = 0, 1, 2, and 3 refer to different load states, respectively, when s = 0, no congestion situation occurs and the massive MIMO cell is relatively idle; when s = 1 or 2, no congestion situation occurs and the massive MIMO cell is relatively busy; and when s = 3, the congestion situation occurs.

The device may preset a rule for determining the load state of the massive MIMO cell according to the indicator value of the first performance indicator. In an example, a correspondence between load states of the massive MIMO cell and ranges where the indicator value of the first performance indicator is located may be set. For example, the load states are represented by the relatively idle state, the relatively busy state, and the congestion state. When 0% ≤ the PRB utilization ≤ 60%, the massive MIMO cell is in the relatively idle state; when 60% < the PRB utilization ≤ 80%, the massive MIMO cell is in the relatively busy state; and when 80% < the PRB utilization ≤ 100%, the massive MIMO cell is in the congestion state. For another example, the load states are represented numerically. When 0% ≤ the PRB utilization ≤ 80%, and 0% ≤ the CCE power ≤ 60% or 0% ≤ the CCE position utilization ≤ 60%, s = 0; when 80% < the PRB utilization ≤ 100%, and 0% ≤ the CCE power ≤ 60% or 0% ≤ the CCE position utilization ≤ 60%, s = 1; when 0% < the PRB utilization ≤ 80%, and 60% < the CCE power ≤ 100% or 60% < the CCE position utilization ≤ 100%, s = 2; and when 80% < the PRB utilization ≤ 100%, and 60% < the CCE power ≤ 100% or 60% < the CCE position utilization ≤ 100%, s = 3.

In an example, it may be set that the load state of the massive MIMO cell is determined according to the load state within the previous preset time period and a switching rule of the load state. For example, the load states are represented by the relatively idle state, the relatively busy state and the congestion state, and the switching rule of the load state is described below. In a case where the load state within the previous preset time period is the relatively idle state, when the current PRB utilization is greater than 80%, the load state is switched to the relatively busy state. In a case where the load state within the previous preset time period is the relatively busy state, when the current PRB utilization is greater than 95%, and the current CCE power is greater than 70% or the current CCE position utilization is greater than 70%, the load state is switched to the congestion state; and when the current PRB utilization is less than 70%, the load state is switched to the relatively idle state. In a case where the load state within the previous preset time period is the congestion state, when the current PRB utilization is less than 90%, or the current CCE power is less than 60% and the current CCE position utilization is less than 60%, the load state is switched to the relatively busy state.

In step 103, a load adjustment strategy matching the load state of the massive MIMO cell is determined and performed, where the load adjustment strategy includes one of the following: migrating a first user of a neighboring cell of the massive MIMO cell into the massive MIMO cell, migrating a second user in the massive MIMO cell into a neighboring cell, migrating a first user of a neighboring cell into the massive MIMO cell and migrating a second user in the massive MIMO cell into the neighboring cell, or maintaining the status quo.

The first user and the second user are different users. When the load adjustment strategy is migrating the first user of the neighboring cell into the massive MIMO cell and migrating the second user in the massive MIMO cell into the neighboring cell, the first user of the neighboring cell may be migrated into the massive MIMO cell first, and then the second user in the massive MIMO cell is migrated into the neighboring cell; or the second user in the massive MIMO cell may be migrated into the neighboring cell first, and then the first user of the neighboring cell is migrated into the massive MIMO cell; or the first user of the neighboring cell may be migrated into the massive MIMO cell at the same time when the second user in the massive MIMO cell is migrated into the neighboring cell. The embodiment is not intended to be limiting.

In an example, the first user or the second user refers to any user. In an example, when migrating the first user of the neighboring cell into the massive MIMO cell, the neighboring cell is denoted as a present cell and the massive MIMO cell is denoted as a target cell; when migrating the second user in the massive MIMO cell into the neighboring cell, the massive MIMO cell is denoted as a present cell and the neighboring cell is denoted as a target cell. The first user or the second user is determined in the manner described below. The flowchart of determining the first user or the second user is shown in FIG. 2.

In step 1001, N users are selected from the present cell, where N ≥ 1 and N is preset.

The value of N may be preset according to actual situations, which is not limited in the embodiment. If the number of users in the present cell is less than N, all users in the present cell are selected. For example, N is preset to be 5; if there are 10 users in the present cell, any 5 users are selected; if there are 4 users in the present cell, the 4 users are selected.

In an example, when migrating the first user of the neighboring cell into the massive MIMO cell, the step in which the N users are selected from the present cell includes that N users are selected from users, in the present cell, having a downlink data volume greater than a preset data volume; when migrating the second user in the massive MIMO cell into the neighboring cell, the step in which the N users are selected from the present cell includes that users having the number of spatial division scheduling times greater than a preset number of times and a spatial division scheduling proportion greater than a first preset threshold in the present cell are ranked according to Spectrum Efficiency (SE) values from small to large, and the first N users are selected.

A user having a downlink data volume greater than the preset data volume is referred to as a large Buffer Status Report (BSR) user. If the number of large BSR users is less than N, all large BSR users are selected. For example, a user having the downlink data volume greater than 1 Kbits within 1 second is counted as a large BSR user. In a case where N is preset to be 5, and if there are 10 large BSR users in the present cell, any 5 large BSR users are selected; and if there are 4 large BSR users in the present cell, the 4 large BSR users are selected. Users, in the present cell, having the number of spatial division scheduling times greater than the preset number of times and the spatial division scheduling proportion greater than the first preset threshold are ranked according to the SE values from small to large, and the first N users are selected. If the number of users satisfying the condition is less than N, all users are selected. The preset number of times and the first preset threshold may be set according to actual requirements, which are not limited in the embodiment. The spatial division scheduling proportion is equal to dividing the number of times that the user performs spatial division scheduling by the number of times that the user performs total scheduling. For example, N is preset to be 5, the preset number of times is 5, and the first present threshold is 20%; if there are 10 users in the present cell, users having the number of spatial division scheduling times greater than 5 and the spatial division scheduling proportion greater than 20% are selected first, then the users having the number of spatial division scheduling times greater than 5 and the spatial division scheduling proportion greater than 20% are ranked according to the SE values from small to large, and the first 5 users are selected; if 4 users satisfy the condition, the 4 users are selected. In this manner, when migrating the first user of the neighboring cell into the massive MIMO cell, a condition is set for the selection process, that is, the selected N users are users having the downlink data volume greater than the preset data volume, so that the user quality of the first user migrated into the massive MIMO cell is improved, and thereby the possibility of improving the traffic of the neighboring cell is increased; when migrating the second user in the massive MIMO cell into the neighboring cell, a condition is set for the selection process, that is, the selected N users are selected from users having the number of spatial division scheduling times greater than the preset number of times and the spatial division scheduling proportion greater than the first preset threshold are ranked according to the SE values from small to large, so that the user quality of the second user migrated into the neighboring cell is improved, and thereby the possibility of improving the traffic of the neighboring cell is increased. Therefore, the possibility of an improvement in the total traffic of all cells in the area where the massive MIMO cell is located is increased.

In step 1002, a second performance indicator of each selected user in the target cell is measured so that an indicator value of the second performance indicator is obtained.

The device measures the second performance indicator of the selected user in the target cell to obtain the indicator value of the second performance indicator of the selected user in the target cell. The second performance indicator is preset. The second performance indicator may be one type of performance indicator or multiple types of performance indicators. In an example, the second performance indicator is Reference Signal Receiving Power (RSRP). The second performance indicator is described as the RSRP in the embodiment and following embodiments, but is not limited thereto.

In step 1003, if the indicator value of the second performance indicator is greater than a preset indicator value of the target cell, the selected user is used as the first user or the second user.

The preset indicator value of the target cell may be set according to actual situations, which is not limited in the embodiment. For example, if the preset indicator value of the RSRP of the target cell is -90 dBm, RSRP values of selected users a, b, c, d, and e in the target cell are measured, and the RSRP values of -88 dBm, -85 dBm, -95 dBm, -100 dBm and -80 dBm are obtained, respectively, so that users a, b, and e are the first user or the second user, and users a, b, and e of the present cell are migrated into the target cell.

In an example, the second performance indicator of a selected user in the target cell and the second performance indicator of the selected user in the present cell are measured respectively so that the indicator value of the second performance indicator of the user in the target cell and the indicator value of the second performance indicator of the user in the present cell are obtained. If the indicator value of the second performance indicator of the user in the target cell is greater than the preset indicator value of the target cell, and the difference between the indicator value of the second performance indicator of the user in the target cell and the indicator value of the second performance indicator of the user in the present cell is greater than or equal to a second preset threshold, the selected user is used as the first user or the second user. For example, if the preset indicator value of the RSRP of the target cell is -90 dBm, the second preset threshold is -5 dBm, the RSRP values of the selected users a, b, c, d and e in the target cell and the RSRP values of the selected users a, b, c, d and e in the present cell are measured, respectively, and the RSRP value of each selected user in the target cell and the RSRP value of the selected user in the present cell are -88 dBm and -85 dBm, -85 dBm and -100 dBm, -95 dBm and -88 dBm, -100 dBm and -90 dBm, and -80 dBm and -83 dBm, respectively, so that users a and e are the first user or the second user, and a and e of the present cell are migrated into the target cell.

In this manner, the user quality of the first user migrated into the massive MIMO cell is improved, thereby the possibility of the improvement in the traffic of the massive MIMO cell is increased, or the user quality of the second user migrated into the neighboring cell is improved, thereby the possibility of the improvement in the traffic of the neighboring cell is increased. Therefore, the possibility of the improvement in the total traffic of all cells in the area where the massive MIMO cell is located is increased.

In an example, after the load adjustment strategy matching the load state of the massive MIMO cell is determined and performed, the method further includes the following: an indicator value of a third performance indicator is acquired; and the preset indicator value of the target cell is updated according to the load state of the massive MIMO cell and the indicator value of the third performance indicator.

The device acquires the indicator value of the third performance indicator within a preset period time before the load adjustment strategy is performed and the indicator value of the third performance indicator within a preset period time after the load adjustment strategy is performed. The third performance indicator may be one type of performance indicator or multiple types of performance indicators. Updating the preset indicator value of the target cell refers to that for any load adjustment strategy, after the load adjustment strategy is performed, according to the load state and the indicator value of the third performance indicator, an adjustment amplitude is obtained according to a preset rule, and then the preset indicator value of the target cell is subjected to one of the following: kept unchanged, increased, or decreased. For example, the load state before the load adjustment strategy is performed and the load state after the load adjustment strategy is performed are a state before the adjustment and a state after the adjustment, respectively. The third performance indicator includes the traffic of the massive MIMO cell, the total traffic of the area where the massive MIMO cell is located and the number of Radio Resource Control (RRC) connection users of the massive MIMO cell, where the traffic of the massive MIMO cell within a preset time period before the load adjustment strategy is performed and the traffic of the massive MIMO cell within a preset time period after the load adjustment strategy is performed are denoted as MM traffic before the adjustment and MM traffic after the adjustment, respectively; the total traffic of the area within a preset time period before the load adjustment strategy is performed and the total traffic of the area within a preset time period after the load adjustment strategy is performed are denoted as area traffic before the adjustment and area traffic after the adjustment, respectively; and the number of RRC connection users of the massive MIMO cell within a preset time period before the load adjustment strategy is performed and the number of RRC connection users of the massive MIMO cell within a preset time period after the load adjustment strategy is performed are denoted as RRC before the adjustment and RRC after the adjustment, respectively. When the load adjustment strategy is migrating the first user of the neighboring cell into the massive MIMO cell, if the state before the adjustment is the same as the state after the adjustment, the RRC after the adjustment minus the RRC before the adjustment is less than or equal to 5, the MM traffic before the adjustment is less than or equal to the MM traffic after the adjustment, the area traffic before the adjustment is less than or equal to the area traffic after the adjustment, and the preset indicator value, that is, Reference Signal Receiving Power (RSRP), of the massive MIMO cell is greater than -105 dBm, the preset indicator value of the RSRP of the massive MIMO cell is decreased by 5 dB; if the state before the adjustment is the same as the state after the adjustment, the RRC after the adjustment minus the RRC before the adjustment is greater than or equal to 20, and the preset indicator value of the RSRP of the massive MIMO cell is less than -90 dBm, the preset indicator value of the RSRP of the massive MIMO cell is increased by 5 dB; if the state before the adjustment is the same as the state after the adjustment, the RRC after the adjustment minus the RRC before the adjustment is greater than 5, the MM traffic before the adjustment is greater than the MM traffic after the adjustment or the area traffic before the adjustment is greater than the area traffic after the adjustment, and the preset indicator value of the RSRP of the massive MIMO cell is less than -90 dBm, the preset indicator value of the RSRP of the massive MIMO cell is increased by 5 dB; and if the state before the adjustment is not same as the state after the adjustment, and the preset indicator value of the RSRP of the neighboring cell is not equal to -90 dBm, the preset indicator value of the RSRP of the neighboring cell is adjusted to be -90 dBm. The preset indicator value of the target cell is updated, so that the preset indicator value of the target cell is more reasonable, and when a user is subsequently determined and selected according to the updated preset indicator value of the target cell as the first user or the second user, the determined first user or the determined second user is more reasonable.

In the embodiment, the step in which the load adjustment strategy matching the load state of the massive MIMO cell is determined and performed includes the step described below. According to a preset correspondence between load states and load adjustment strategies, a load adjustment strategy corresponding to the load state of the massive MIMO cell is used as the load adjustment strategy matching the load state of the massive MIMO cell, and the load adjustment strategy matching the load state of the massive MIMO cell is performed. The correspondence between the load states and the load adjustment strategies is preset in the device, and the number of types of the load states is the same as the number of the load adjustment strategies. When the load state of the massive MIMO cell is determined, the correspondence is queried, the load adjustment strategy corresponding to the load state is used as the load adjustment strategy matching the load state, and the load adjustment strategy is performed. The correspondence between the load states and the load adjustment strategies is preset, so that after the load state is determined, the load adjustment strategy matching the load state can be determined relatively quickly and then performed, which is simple and feasible.

In an example, when the load state is that no congestion situation occurs in the massive MIMO cell, the corresponding load adjustment strategy is migrating the first user of the neighboring cell into the massive MIMO cell; and when the load state is that a congestion situation occurs in the massive MIMO cell, the corresponding load adjustment strategy is migrating the second user in the massive MIMO cell into the neighboring cell. For example, it is preset that the load state includes that no congestion situation occurs and the massive MIMO cell is relatively idle, no congestion situation occurs and the massive MIMO cell is relatively busy, and the congestion situation occurs. When no congestion situation occurs and the massive MIMO cell is relatively idle or no congestion situation occurs and the massive MIMO cell is relatively busy, the corresponding load adjustment strategy is migrating the first user of the neighboring cell into the massive MIMO cell; and when the congestion situation occurs, the corresponding load adjustment strategy is migrating the second user in the massive MIMO cell into the neighboring cell. The correspondence between the load states and the load adjustment strategies is shown in the table below.

| Load state | Load adjustment strategy |
| --- | --- |
| No congestion situation occurs and the massive MIMO cell is relatively idle | Migrate the first user of the neighboring cell into the massive MIMO cell |
| No congestion situation occurs and the massive MIMO cell is relatively busy | Migrate the first user of the neighboring cell into the massive MIMO cell |
| A congestion situation occurs | Migrate the second user in the massive MIMO cell into the neighboring cell |

When no congestion situation occurs in the massive MIMO cell, it represents that more users may access the massive MIMO cell, and then a user of the neighboring cell is migrated into the massive MIMO cell, so that it is possible to improve the traffic of the massive MIMO cell; when a congestion situation occurs in the massive MIMO cell, it represents that the massive MIMO cell cannot satisfy the requirements of users, and the second user in the massive MIMO cell is migrated into the neighboring cell, so that it is possible to improve the traffic of the neighboring cell. Therefore, it is possible to improve the total traffic of all cells in the area where the massive MIMO cell is located.

In an example, the step in which N users are selected from users, in the present cell, having the downlink data volume greater than the preset data volume includes the step described below. In a case where the load state is that no congestion situation occurs in the massive MIMO cell and the massive MIMO cell is relatively busy, the N users are selected from the users having the downlink data volume greater than the preset data volume in the present cell.

When the load state is that no congestion situation occurs in the massive MIMO cell and the massive MIMO cell is relatively idle, the N users selected from the present cell are not limited; the N users may be any N users, or may be N users having the downlink data volume greater than the preset data volume. When the load state is that no congestion situation occurs in the massive MIMO cell and the massive MIMO cell is relatively busy, N users are selected from users having the downlink data volume greater than the preset data volume in the present cell. When the load state is that a congestion situation occurs in the massive MIMO cell, users having the number of spatial division scheduling times greater than the preset number of times and the spatial division scheduling proportion greater than the first preset threshold in the present cell are ranked according to SE values from small to large, and the first N users are selected. In this manner, in a case where no congestion situation occurs in the massive MIMO cell and the massive MIMO cell is relatively busy, the selected users are N users having the downlink data volume greater than the preset data volume, so that the user quality of the first user migrated into the massive MIMO cell is improved, and thus the possibility of improving the traffic of the massive MIMO cell is increased.

In the embodiment, the indicator value of the first performance indicator of the massive MIMO cell is acquired first, and then the load state of the massive MIMO cell may be accurately determined according to the indicator value of the first performance indicator. The load state can reflect the busyness degree of the massive MIMO cell, and the load adjustment strategy includes one of the following: migrating the first user of the neighboring cell of the massive MIMO cell into the massive MIMO cell, migrating the second user in the massive MIMO cell into the neighboring cell, migrating the first user of the neighboring cell into the massive MIMO cell and migrating the second user in the massive MIMO cell into the neighboring cell, or maintaining the status quo. That is, the busyness degree of the massive MIMO cell can be adjusted through the load adjustment strategy, and the determined load adjustment strategy matching the load state matches the current busyness degree. Therefore, performing the load adjustment strategy matching the load state is conducive to adjusting the busyness degree of the massive MIMO cell to a better state, so that it is beneficial to exerting the advantages of the massive MIMO cell and it is possible to improve the traffic of the massive MIMO cell; further, it is possible to improve the total traffic of all cells in the area where the massive MIMO cell is located. Moreover, the correspondence between the load states and the load adjustment strategies is preset so that after the load state is determined, the load adjustment strategy matching the load state can be determined relatively quickly and then performed, which is simple and feasible.

The claimed invention comprises a load adjustment method, comprising:

acquiring an indicator value of a first performance indicator of a massive Multiple-Input-Multiple-Output, MIMO, cell;

determining a load state of the massive MIMO cell according to the indicator value of the first performance indicator; and

determining and performing a load adjustment strategy matching the load state of the massive MIMO cell, wherein the load adjustment strategy comprises one of the following: migrating a first user of a neighboring cell of the massive MIMO cell into the massive MIMO cell, migrating a second user in the massive MIMO cell into a neighboring cell of the massive MIMO cell, migrating a first user of a neighboring cell of the massive MIMO cell into the massive MIMO cell and migrating a second user in the massive MIMO cell into the neighboring cell, or maintaining a status quo;

wherein in migrating the first user of the neighboring cell into the massive MIMO cell, the neighboring cell is denoted as a present cell and the massive MIMO cell is denoted as a target cell; and in migrating the second user in the massive MIMO cell into the neighboring cell, the massive MIMO cell is denoted as a present cell and the neighboring cell is denoted as a target cell; and

the first user or the second user is determined in the following manner:

selecting N users from the present cell, wherein $N \geq 1$ and N is preset;

measuring a second performance indicator of each of the selected N users in the target cell to obtain an indicator value of the second performance indicator; and

in response to the indicator value of the second performance indicator being greater than a preset indicator value of the target cell, using a selected user having the indicator value of the second performance indicator greater than the preset indicator value as the first user or the second user.

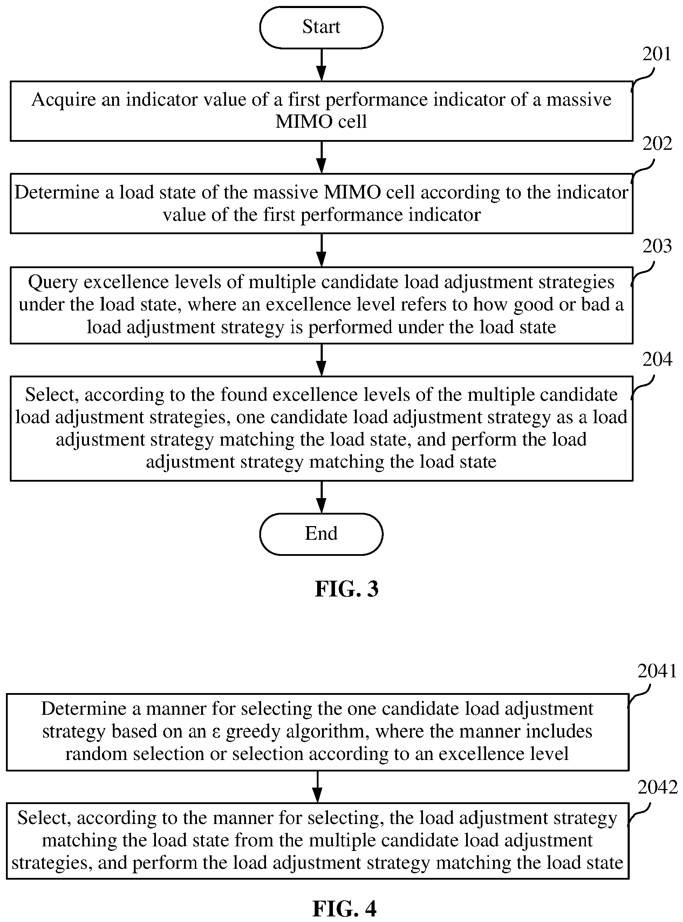

Second embodiment of the present application relates to a load adjustment method. The second embodiment is substantially the same as the first embodiment, and the main difference between the second embodiment and the first embodiment is that excellence levels of multiple candidate load adjustment strategies under the load state are preset, and the load adjustment strategy matching the load state for performing is determined according to the excellence levels. The flowchart is shown in FIG. 3 and includes steps described below.

In step 201, an indicator value of a first performance indicator of a massive MIMO cell is acquired.

In step 202, a load state of the massive MIMO cell is determined according to the indicator value of the first performance indicator.

Steps 201 to 202 are similar to steps 101 to 102 and are not repeated here.

In step 203, excellence levels of multiple candidate load adjustment strategies under the load state of the Massive MIMO cell are queried, where an excellence level refers to how good and bad a load adjustment strategy is performed under the load state.

The load adjustment strategy here is similar to the load adjustment strategy in the first embodiment and is not repeated here. The excellence level may be expressed by numerical values, or may be expressed by various grades such as good and bad. In the present embodiment and the following embodiments, the excellence level is expressed by a numerical value; the larger the numerical value is, the more excellent the load adjustment strategy is, but not limited thereto. In an initial operation of the device, initial values of the excellence levels of the multiple candidate load adjustment strategies under different load states may all be 0, or may be allocated different values according to practical experience; therefore, multiple candidate load adjustment strategies corresponding different load states may have different excellence levels, and it is necessary to query the excellence levels of the multiple candidate load adjustment strategies under a load state. For example, cases where $s = 0$, $s = 1$, $s = 2$, and $s = 3$ refer to different load states, respectively, and cases where $a = 0$, $a = 1$, $a = 2$ and $a = 3$ refers to different load adjustment strategies, respectively. That is, the case where $a = 0$ refers to migrating the first user of the neighboring cell of the massive MIMO cell into the massive MIMO cell; the case where $a = 1$ refers to migrating the second user in the massive MIMO cell into the neighboring cell; the case where $a = 2$ refers to migrating the first user of the neighboring cell into the massive MIMO cell and migrating the second user in the massive MIMO cell into the neighboring cell; and the case where a = 3 refers to maintaining the status quo. Under different load states, the excellence levels of the multiple candidate load adjustment strategies are shown in the table below.

|       | a = 0 | a = 1 | a = 2 | a = 3 |
|-------|-------|-------|-------|-------|
| s = 0 | 1     | 2     | 5     | 3     |
| s = 1 | 4     | 0     | 3     | 6     |
| s = 2 | 3     | 2     | 5     | 1     |
| s = 3 | 2     | 4     | 3     | 1     |

In step 204, one candidate load adjustment strategy is selected according to the found excellence levels of the multiple candidate load adjustment strategies as the load adjustment strategy matching the load state of the massive MIMO cell, and the load adjustment strategy matching the load state of the massive MIMO cell is performed.

In an example, the step in which one candidate load adjustment strategy is selected according to the found excellence levels of the multiple candidate load adjustment strategies includes the step described below. A load adjustment strategy having the highest excellence level is directly selected from the found excellence levels of the multiple candidate load adjustment strategies, or the found excellence levels of the multiple candidate load adjustment strategies are ranked from high to low, and one load adjustment strategy is randomly selected from two load adjustment strategies having the top two excellence levels, etc. As described in the preceding examples, when the load state satisfies that s = 2, the excellence levels of the multiple candidate load adjustment strategies are 3, 2, 5, and 1, respectively, and the load adjustment strategy a having the highest excellence level, that is, a = 2, is directly selected.

In an example, the flowchart for the step in which the one candidate load adjustment strategy is selected according to the found excellence levels of the multiple candidate load adjustment strategies as the load adjustment strategy matching the load state of the massive MIMO cell and the load adjustment strategy matching the load state of the massive MIMO cell is performed is shown in FIG. 4 and includes steps described below.

In step 2041, a manner for selecting the one candidate load adjustment strategy is determined based on an $\varepsilon$ greedy algorithm, where the manner includes random selection or selection according to an excellence level.

A random number x is generated first, where $0 \leq x \leq 1$. If x is less than $\varepsilon$, the manner for selecting the one candidate load adjustment strategy is determined as the random selection; if x is greater than or equal to $\varepsilon$, the manner for selecting the one candidate load adjustment strategy is determined as the selection according to the excellence level, where

$$\varepsilon = 1/\sqrt{T}$$ . The load adjustment method is performed periodically, and T is the current number of times of performing. For example, T = 255, and $\varepsilon$ = 0.067. If x is 0.02, the manner for selecting is the random selection; and if x is 0.08, the manner for selecting is the selection according to the excellence level

In step 2042, according to the manner for selecting, the load adjustment strategy matching the load state of the massive MIMO cell is selected from the multiple candidate load adjustment strategies, and the load adjustment strategy matching the load state of the massive MIMO cell is performed.

If the manner for selecting is the selection according to the excellence level, a candidate value having the highest excellence level is selected from the candidate load adjustment strategies. For example, when the load state satisfies that s = 2, the excellence levels of the multiple candidate load adjustment strategies are 3, 2, 5, and 1, respectively, and the load adjustment strategy a having the highest excellence level, that is, a = 2, is selected. If the manner for selecting is the random selection, any candidate load adjustment strategy is selected.

The manner for selecting the one candidate load adjustment strategy can be accurately determined through the $\varepsilon$ greedy algorithm, and the load adjustment strategy matching the load state is selected according to different selection manners. In this manner, the appropriate load adjustment strategy matching the load state can be selected accurately.

In the embodiment, in this manner, the determined load adjustment strategy matching the load state of the massive MIMO cell is an optimal load adjustment strategy under the load state, that is, a degree of matching between the load adjustment strategy selected in this manner and the current busyness degree of the massive MIMO cell is higher, so that the possibility of improving the traffic of the massive MIMO cell is increased.

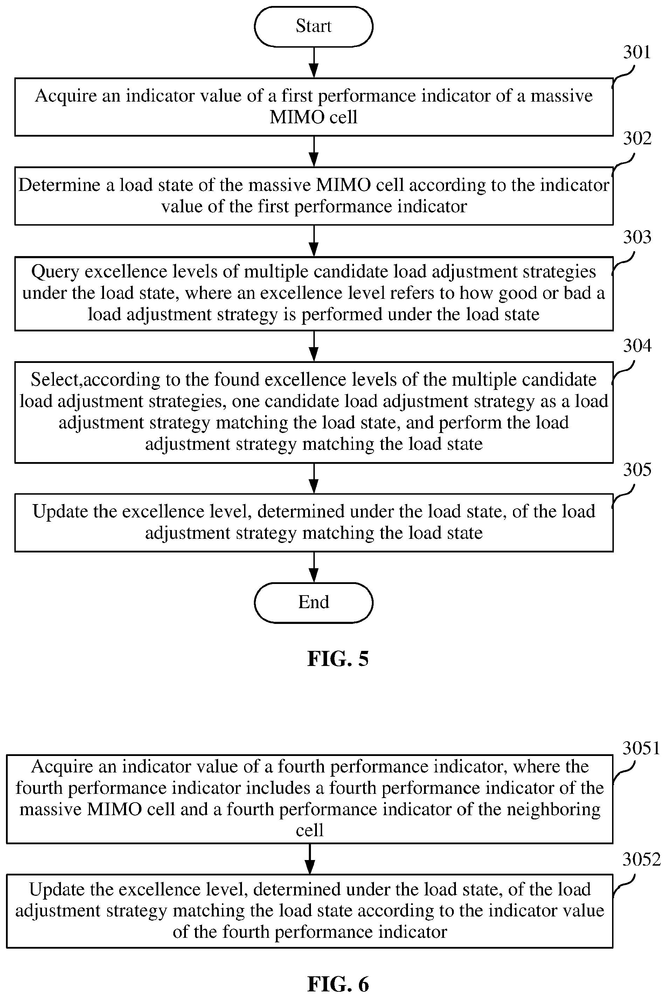

Third embodiment of the present application relates to a load adjustment method. The third embodiment is substantially the same as the second embodiment, and the main difference between the third embodiment and the second embodiment is that an excellence level of the load adjustment strategy matching the load state, which is determined under the load state, is updated. The flowchart is shown in FIG. 5 and includes steps described below.

In step 301, an indicator value of a first performance indicator of a massive MIMO cell is acquired.

In step 302, a load state of the massive MIMO cell is determined according to the indicator value of the first performance indicator.

In step 303, excellence levels of multiple candidate load adjustment strategies under the load state are found, where an excellence level refers to how good or bad a load adjustment strategy is performed under the load state.

In step 304, one candidate load adjustment strategy is selected according to the found excellence levels of the multiple candidate load adjustment strategies as the load adjustment strategy matching the load state of the massive MIMO cell, and the load adjustment strategy matching the load state of the massive MIMO cell is performed.

Steps 301 to 304 are similar to steps 201 to 204 and are not repeated here.

In step 305, an excellence level, determined under the load state of the massive MIMO cell, of the load adjustment strategy matching the load state of the massive MIMO cell is updated.

In an example, an adjustment value of the excellence level may be preset. The adjustment value of the excellence level plus an original excellence level is a new excellence level, and the new excellence level is updated as the excellence level, determined under the load state, of the load adjustment strategy matching the load state. For example, the preset adjustment value of the excellence level is 2, the original excellence level is 3, and thus the new excellence level is 5; the new excellence level 5 is updated as the excellence level of the load adjustment strategy matching the load state, which is determined under the load state.

In an example, a new excellence level may be preset, and the new excellence level is directly updated as the excellence level of the load adjustment strategy matching the load state, which is determined under the load state. For example, the new excellence level is preset to be 5, and the new excellence level 5 is directly updated as the excellence level, which is determined under the load state, of the load adjustment strategy matching the load state.

In an example, the flowchart for the step in which the excellence level, determined under the load state, of the load adjustment strategy matching the load state is updated is shown in FIG. 6 and includes steps described below.

In step 3051, an indicator value of a fourth performance indicator is acquired, where the fourth performance indicator includes a fourth performance indicator of the massive MIMO cell and a fourth performance indicator of a neighboring cell.

In step 3052, the excellence level, determined under the load state of the massive MIMO cell, of the load adjustment strategy matching the load state of the massive MIMO cell is updated according to the indicator value of the fourth performance indicator.

The fourth performance indicator may be one type of performance indicator or multiple types of performance indicators. According to the indicator value of the fourth performance indicator, the value of the fourth performance indicator is substituted into a preset formula to obtain an adjustment value of the excellence level through calculation, and the excellence level, determined under the load state, of the load adjustment strategy matching the load state is updated according to the adjustment value. When the excellence level of the load adjustment strategy matching the load state which is determined under the load state is updated, not only the fourth performance indicator of the massive MIMO cell but also the fourth performance indicator of the neighboring cell are taken into account, so that the accuracy of the updated excellence level is improved.

In an example, the fourth performance indicator includes the traffic $Payload^{present}$ of the massive MIMO cell and the traffic $Payload^{neighb}$ of the neighboring cell. The fourth indicator value is substituted into formula one and formula two.

Formula one,

$$R = \beta_{MM} min\left(\frac{Payload_{T+1}^{present}}{Payload_T^{present}} - 1, 1\right) + \beta_{Cluster} min\left(\frac{Payload_{T+1}^{present} + \sum_{n=1}^{N} Payload_{T+1}^{neighb,n}}{Payload_T^{present} + \sum_{n=1}^{N} Payload_T^{neighb,n}} - 1, 1\right).$$

Formula two,

$$(Q_T^{s,a})' = Q_T^{s,a} + a(R + \gamma max Q_{T+1}^{s',a'} - Q_T^{s,a}).$$

$Q_T^{s,a}$ represents the excellence level before updating, $(Q_T^{s,a})'$ represents the updated excellence level, $Payload_T^{present}$ represents the traffic of the massive MIMO cell acquired within the latest preset time period, $Payload_{T+1}^{present}$ represents the traffic of the massive MIMO cell acquired within the next preset time period,

$Payload_{\mathrm{T}}^{\mathrm{neighb,n}}$ represents the traffic, acquired within the latest preset time period, of a neighboring cell having an index value of n, and $Payload_{\mathrm{T+1}}^{\mathrm{neighb,n}}$ represents the traffic, acquired with the next preset time period, of the neighboring cell having the index value of n. An evaluation weight $\beta_{MM}$ of the massive MIMO cell is equal to 0.5, an evaluation weight $\beta_{Cluster}$ of the area where the massive MIMO cell is located is equal to 0.5, $\max Q_{T+1}^{s',a'}$ represents the maximum value of excellence levels of multiple candidate values (that is, multiple candidate load adjustment strategies) of a target operation parameter of the device under the current state within the next preset time period, an initial learning rate *a* is equal to 0.1, and a discount rate $\gamma$ is equal to 0.9.

In the embodiment, the excellence level of the load adjustment strategy matching the load state which is determined under different load states is continuously updated, so that the excellence level is more accurate; moreover, the load adjustment strategy matching the load state is determined every time according to the latest updated excellence level, so that the rationality of the determined load adjustment strategy matching the load state is improved.

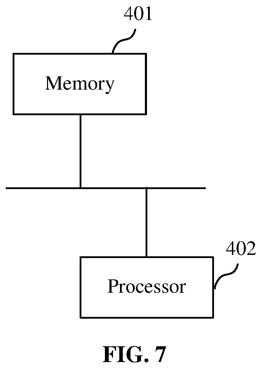

Fourth embodiment of the present application relates to a server. As shown in FIG. 7, the server includes at least one processor 402 and a memory 401 communicatively connected to the at least one processor 402. The memory 401 is configured to store an instruction executable by the at least one processor 402 to enable the at least one processor 402 to perform the preceding embodiments of the load adjustment method.

The memory 401 and the at least one processor 402 are connected through a bus. The bus may include any number of interconnected buses and bridges. The bus connects together various circuits of one or more processors 402 and the memory 401. The bus may also connect together various other circuits such as peripheral devices, voltage regulators, power management circuits, etc., which is well known in the art and therefore is not described here. A bus interface provides an interface between the bus and a transceiver. The transceiver may be one or more elements, for example, may be multiple senders and receivers, and provides a unit configured to communicate with various other devices over a transmission medium. Data processed by the at least one processor 402 is transmitted over a wireless medium through an antenna. The antenna also receives data and transmits the data to the at least one processor 402.

The at least one processor 402 is responsible for managing the bus and general processing and may also provide various functions including timing, peripheral interfaces, voltage regulation, power management and other control functions. The memory 401 is configured to store data used by the at least one processor 402 in performing operations.

Fifth embodiment of the present application relates to a computer-readable storage medium configured to store a computer program. The computer program, when executed by a processor, implements the preceding method embodiments.

That is, it may be understood by those of skill in the art that all or part of the steps in the method of the preceding embodiments may be implemented by related hardware instructed by a program. The program is stored in a storage medium and includes instructions for causing a device (which may be a single-chip microcomputer, a chip, etc.) or a processor to perform all or part of the steps of the method described in various embodiments of the present application. The preceding storage medium may include a USB flash drive, a mobile hard disk, a read-only memory (ROM), a randomaccess memory (RAM), a magnetic disk, an optical disc or another medium that can store program codes.

**Claims**

1.   A load adjustment method, comprising:

acquiring (101, 201, 301) an indicator value of a first performance indicator of a massive Multiple-Input-Multiple-Output, MIMO, cell;
determining (102, 202, 302) a load state of the massive MIMO cell according to the indicator value of the first performance indicator; and
determining and performing (103) a load adjustment strategy matching the load state of the massive MIMO cell, wherein the load adjustment strategy comprises one of the following: migrating a first user of a neighboring cell of the massive MIMO cell into the massive MIMO cell, migrating a second user in the massive MIMO cell into a neighboring cell of the massive MIMO cell, migrating a first user of a neighboring cell of the massive MIMO cell into the massive MIMO cell and migrating a second user in the massive MIMO cell into the neighboring cell, or maintaining a status quo;
wherein in migrating the first user of the neighboring cell into the massive MIMO cell, the neighboring cell is denoted as a present cell and the massive MIMO cell is denoted as a target cell; and in migrating the second user in the massive MIMO cell into the neighboring cell, the massive MIMO cell is denoted as a present cell and the neighboring cell is denoted as a target cell; and
the first user or the second user is determined in the following manner:

selecting (1001) N users from the present cell, wherein N ≥ 1 and N is preset;
measuring (1002) a second performance indicator of each of the selected N users in the target cell to obtain an indicator value of the second performance indicator; and
in response to the indicator value of the second performance indicator being greater than a preset indicator value of the target cell, using (1003) a selected user having the indicator value of the second performance indicator greater than the preset indicator value as the first user or the second user.

2. The method according to claim 1, wherein in migrating the first user of the neighboring cell into the massive MIMO cell, selecting (1001) the N users from the present cell comprises:

selecting N users from users having a downlink data volume greater than a preset data volume in the present cell; and
wherein in migrating the second user in the massive MIMO cell into the neighboring cell, selecting (1001) the N users from the present cell comprises:
ranking, according to spectrum efficiency, SE, values from small to large, users having a number of spatial division scheduling times greater than a preset number of times and a spatial division scheduling proportion greater than a first preset threshold in the present cell, and selecting first N users from ranking.

3. The method according to claim 1, after determining and performing (103) the load adjustment strategy matching the load state of the massive MIMO cell, further comprising:

acquiring an indicator value of a third performance indicator; and
updating the preset indicator value of the target cell according to the load state and the indicator value of the third performance indicator.

4. The method according to any one of claims 1 to 3, wherein determining and performing (103) the load adjustment strategy matching the load state of the massive MIMO cell comprises:

querying (203, 303) excellence levels of multiple candidate load adjustment strategies under the load state of the massive MIMO cell, wherein an excellence level refers to how good or bad a load adjustment strategy is performed under the load state of the massive MIMO cell; and
selecting (204, 304), according to the found excellence levels of the multiple candidate load adjustment strategies, one of the multiple candidate load adjustment strategies as the load adjustment strategy matching the load state of the massive MIMO cell and performing the load adjustment strategy matching the load state of the massive MIMO cell.

5. The method according to any one of claims 1 to 3, wherein determining and performing (103) the load adjustment strategy matching the load state of the massive MIMO cell comprises:
using, according to a preset correspondence between load states and load adjustment strategies, a load adjustment strategy corresponding to the load state of the massive MIMO cell as the load adjustment strategy matching the load state of the massive MIMO cell and performing the load adjustment strategy matching the load state of the massive MIMO cell.

6. The method according to claim 5, wherein the preset correspondence between the load states and the load adjustment strategies comprises:

in a case where the load state of the massive MIMO cell is that no congestion situation occurs in the massive MIMO cell, the load adjustment strategy corresponding to the load state of the massive MIMO cell is migrating the first user of the neighboring cell into the massive MIMO cell; and
in a case where the load state of the massive MIMO cell is that a congestion situation occurs in the massive MIMO cell, the load adjustment strategy corresponding to the load state of the massive MIMO cell is migrating the second user in the massive MIMO cell into the neighboring cell.

7. The method according to claim 2, wherein selecting the N users from the users having the downlink data volume greater than the preset data volume in the present cell comprises:

in a case where the load state of the massive MIMO cell is that no congestion situation occurs in the massive MIMO cell and the load state of the massive MIMO cell is in a relatively busy state, selecting the N users from the users having the downlink data volume greater than the preset data volume in the present cell.

8. The method according to claim 4, after selecting (204, 304), according to the found excellence levels of the multiple candidate load adjustment strategies, the one of the multiple candidate load adjustment strategies as the load adjustment strategy matching the load state of the massive MIMO cell and performing the load adjustment strategy matching the load state of the massive MIMO cell, further comprising:
updating (305) an excellence level, determined under the load state of the massive MIMO cell, of the load adjustment strategy matching the load state of the massive MIMO cell.

9. The method according to claim 8, wherein updating (305) the excellence level, determined under the load state of the massive MIMO cell, of the load adjustment strategy matching the load state of the massive MIMO cell comprises:

acquiring (3051) an indicator value of a fourth performance indicator, wherein the fourth performance indicator comprises a fourth performance indicator of the massive MIMO cell and a fourth performance indicator of the neighboring cell; and
updating (3052), according to the indicator value of the fourth performance indicator, the excellence level, determined under the load state of the massive MIMO cell, of the load adjustment strategy matching the load state of the massive MIMO cell.

10. The method according to claim 4, wherein selecting (204, 304), according to the found excellence levels of the multiple candidate load adjustment strategies, the one of the multiple candidate load adjustment strategies as the load adjustment strategy matching the load state of the massive MIMO cell and performing the load adjustment strategy matching the load state of the massive MIMO cell comprises:

determining (2041) a manner for selecting the one of the multiple candidate load adjustment strategies based on an $\varepsilon$ greedy algorithm, wherein the manner comprises random selection or selection according to an excellence level; and
selecting (2042), according to the manner for selecting, the load adjustment strategy matching the load state of the massive MIMO cell from the multiple candidate load adjustment strategies and
performing the load adjustment strategy matching the load state of the massive MIMO cell.

11. A server, comprising:

at least one processor (402); and
a memory (401) communicatively connected to the at least one processor;
wherein the memory (401) is configured to store an instruction executable by the at least one processor to enable the at least one processor (402) to perform the load adjustment method according to any one of claims 1 to 10.

12. A computer-readable storage medium, storing a computer program which, when performed by a processor, implements the load adjustment method according to any one of claims 1 to 10.

## Patentansprüche

1. Verfahren zur Einstellung der Last, umfassend:

erfassen (101, 201, 301) eines Indikatorwertes eines ersten Leistungsindikators einer massiven Multiple-Input-Multiple-Output-Zelle MIMO;
bestimmen (102, 202, 302) eines Lastzustands der Massive-MIMO-Zelle gemäß dem Indikatorwert des ersten Leistungsindikators, und
bestimmen und Durchführen (103) einer Lastanpassungsstrategie, die an den Lastzustand der Massive-MIMO-Zelle angepasst ist, wobei die Lastanpassungsstrategie eines der folgenden umfasst: migrieren eines ersten Benutzers einer benachbarten Zelle der massiven MIMO-Zelle in die massive MIMO-Zelle, Migrieren eines zweiten Benutzers in der massiven MIMO-Zelle in eine benachbarte Zelle der massiven MIMO-Zelle, Migrieren eines ersten Benutzers einer benachbarten Zelle der massiven MIMO-Zelle in die massive MIMO-Zelle und Migrieren eines zweiten Benutzers in der massiven MIMO-Zelle in die benachbarte Zelle oder Beibehalten eines Status Quo;

wobei bei der Migration des ersten Benutzers der benachbarten Zelle in die massive MIMO-Zelle die benachbarte Zelle als eine gegenwärtige Zelle und die massive MIMO-Zelle als eine Zielzelle bezeichnet wird; und bei der Migration des zweiten Benutzers in der massiven MIMO-Zelle in die benachbarte Zelle die massive MIMO-Zelle als eine gegenwärtige Zelle und die benachbarte Zelle als eine Zielzelle bezeichnet wird; und

der erste Benutzer oder der zweite Benutzer wird auf folgende Weise bestimmt:

auswahl (1001) von N Benutzern aus der vorliegenden Zelle, wobei $N \geq 1$ und N voreingestellt ist;

messen (1002) eines zweiten Leistungsindikators von jedem der ausgewählten N Benutzer in der Zielzelle, um einen Indikatorwert des zweiten Leistungsindikators zu erhalten, und

als Reaktion darauf, dass der Indikatorwert des zweiten Leistungsindikators größer als ein voreingestellter Indikatorwert der Zielzelle ist, die Verwendung (1003) eines ausgewählten Benutzers, dessen Indikatorwert des zweiten Leistungsindikators größer als der voreingestellte Indikatorwert ist, als der erste Benutzer oder der zweite Benutzer.

2. Verfahren nach Anspruch 1, wobei bei der Migration des ersten Nutzers der Nachbarzelle in die Massive-MIMO-Zelle die Auswahl (1001) der N Nutzer aus der gegenwärtigen Zelle umfasst:

auswahl von N Nutzern aus Nutzern mit einem Abwärtsverbindungs-Datenvolumen, das größer ist als ein voreingestelltes Datenvolumen in der aktuellen Zelle; und

wobei bei der Migration des zweiten Benutzers in der Massive-MIMO-Zelle in die benachbarte Zelle die Auswahl (1001) der N Benutzer aus der gegenwärtigen Zelle umfasst:

einordnen von Nutzern mit einer Anzahl von Raumaufteilungszeitpunkten, die größer als eine voreingestellte Anzahl von Zeitpunkten ist, und einem Raumaufteilungszeitanteil, der größer als ein erster voreingestellter Schwellenwert in der vorliegenden Zelle ist, nach Spektrumseffizienzwerten, SE, von klein bis groß, und Auswählen der ersten N Nutzer aus der Einordnung.

3. Verfahren nach Anspruch 1, das nach dem Bestimmen und Ausführen (103) der Lastanpassungsstrategie, die an den Lastzustand der Massive-MIMO-Zelle angepasst ist, ferner umfasst:

erfassen eines Indikatorwertes eines dritten Leistungsindikators, und

aktualisieren des voreingestellten Indikatorwerts der Zielzelle entsprechend dem Lastzustand und dem Indikatorwert des dritten Leistungsindikators.

4. Verfahren nach einem der Ansprüche 1 bis 3, wobei das Bestimmen und Durchführen (103) der Lastanpassungsstrategie passend zum Lastzustand der Massive-MIMO-Zelle umfasst:

abfragen (203, 303) von Exzellenzniveaus mehrerer Kandidaten-Lastanpassungsstrategien unter dem Lastzustand der massiven MIMO-Zelle, wobei sich ein Exzellenzniveau darauf bezieht, wie gut oder schlecht eine Lastanpassungsstrategie unter dem Lastzustand der massiven MIMO-Zelle durchgeführt wird; und

auswählen (204, 304), entsprechend den gefundenen Exzellenzniveaus der mehreren Kandidaten-Lastanpassungsstrategien, einer der mehreren Kandidaten-Lastanpassungsstrategien als die Lastanpassungsstrategie, die dem Lastzustand der massiven MIMO-Zelle entspricht, und Ausführen der Lastanpassungsstrategie, die dem Lastzustand der massiven MIMO-Zelle entspricht.

5. Verfahren nach einem der Ansprüche 1 bis 3, wobei das Bestimmen und Durchführen (103) der Lastanpassungsstrategie passend zum Lastzustand der Massive-MIMO-Zelle umfasst:

verwenden einer Lasteinstellstrategie, die dem Lastzustand der massiven MIMO-Zelle entspricht, gemäß einer voreingestellten Korrespondenz zwischen Lastzuständen und Lasteinstellstrategien als die Lasteinstellstrategie, die dem Lastzustand der massiven MIMO-Zelle entspricht, und Ausführen der Lasteinstellstrategie, die dem Lastzustand der massiven MIMO-Zelle entspricht.

6. Verfahren nach Anspruch 5, wobei die voreingestellte Korrespondenz zwischen den Lastzuständen und den Lasteinstellstrategien umfasst:

in einem Fall, in dem der Lastzustand der Massiv-MIMO-Zelle so ist, dass keine Überlastungssituation in der Massiv-MIMO-Zelle auftritt, die Lastanpassungsstrategie, die dem Lastzustand der Massiv-MIMO-Zelle entspricht, darin besteht, den ersten Nutzer der benachbarten Zelle in die Massiv-MIMO-Zelle zu migrieren; und

in einem Fall, in dem der Lastzustand der Massiv-MIMO-Zelle darin besteht, dass eine Überlastungssituation in der Massiv-MIMO-Zelle auftritt, die Lastanpassungsstrategie, die dem Lastzustand der Massiv-MIMO-Zelle entspricht, darin besteht, den zweiten Benutzer in der Massiv-MIMO-Zelle in die benachbarte Zelle zu migrieren.

7. Verfahren nach Anspruch 2, wobei das Auswählen der N Nutzer aus den Nutzern mit einem Downlink-Datenvolumen, das größer als das voreingestellte Datenvolumen in der gegenwärtigen Zelle ist, umfasst:
in einem Fall, in dem der Lastzustand der massiven MIMO-Zelle so ist, dass keine Überlastungssituation in der massiven MIMO-Zelle auftritt und der Lastzustand der massiven MIMO-Zelle in einem relativ ausgelasteten Zustand ist, Auswahl der N Nutzer aus den Nutzern, deren Downlink-Datenvolumen größer ist als das voreingestellte Datenvolumen in der vorliegenden Zelle.

8. Verfahren nach Anspruch 4, das nach dem Auswählen (204, 304) der einen der mehreren Kandidaten-Lastanpassungsstrategien als die Lastanpassungsstrategie, die dem Lastzustand der massiven MIMO-Zelle entspricht, gemäß den gefundenen Exzellenzniveaus der mehreren Kandidaten-Lastanpassungsstrategien und dem Durchführen der Lastanpassungsstrategie, die dem Lastzustand der massiven MIMO-Zelle entspricht, weiterhin umfasst:
aktualisieren (305) eines Exzellenzniveaus, das unter dem Lastzustand der Massiv-MIMO-Zelle bestimmt wurde, der Lastanpassungsstrategie, die dem Lastzustand der Massiv-MIMO-Zelle entspricht.

9. Verfahren nach Anspruch 8, wobei das Aktualisieren (305) des unter dem Lastzustand der Massiv-MIMO-Zelle bestimmten Exzellenzniveaus der Lastanpassungsstrategie, die an den Lastzustand der Massiv-MIMO-Zelle angepasst ist, umfasst:

   erfassen (3051) eines Indikatorwertes eines vierten Leistungsindikators, wobei der vierte Leistungsindikator einen vierten Leistungsindikator der Massive-MIMO-Zelle und einen vierten Leistungsindikator der benachbarten Zelle umfasst; und
   aktualisieren (3052), entsprechend dem Indikatorwert des vierten Leistungsindikators, des unter dem Lastzustand der massiven MIMO-Zelle bestimmten Exzellenzniveaus der Lastanpassungsstrategie, die dem Lastzustand der massiven MIMO-Zelle entspricht.

10. Verfahren nach Anspruch 4, wobei das Auswählen (204, 304) - basierend auf den ermittelten Exzellenzniveaus der mehreren kandidierenden Lastanpassungsstrategien

   - einer dieser Strategien als Lastanpassungsstrategie, die dem Lastzustand der massiven MIMO-Zelle entspricht, und das Ausführen der Lastanpassungsstrategie, die dem Lastzustand der massiven MIMO-Zelle entspricht, Folgendes umfasst:

   bestimmen (2041) einer Art und Weise zum Auswählen der einen der mehreren Kandidaten-Lastanpassungsstrategien auf der Grundlage eines ε-Greedy-Algorithmus, wobei die Art und Weise eine Zufallsauswahl oder eine Auswahl gemäß einem Exzellenzniveau umfasst; und
   auswählen (2042), entsprechend der Art und Weise des Auswählens, der Lastanpassungsstrategie, die mit dem Lastzustand der massiven MIMO-Zelle übereinstimmt, aus den mehreren Kandidaten-Lastanpassungsstrategien und Ausführen der Lastanpassungsstrategie, die mit dem Lastzustand der massiven MIMO-Zelle übereinstimmt.

11. Server, umfassend:

   mindestens einen Prozessor (402); und
   einen Speicher (401), der kommunikativ mit dem mindestens einen Prozessor verbunden ist;
   wobei der Speicher (401) so konfiguriert ist, dass er einen Befehl speichert, der von dem mindestens einen Prozessor ausgeführt werden kann, um den mindestens einen Prozessor (402) in die Lage zu versetzen, das Lasteinstellungsverfahren nach einem der Ansprüche 1 bis 10 durchzuführen.

12. Computerlesbares Speichermedium, das ein Computerprogramm speichert, das, wenn es von einem Prozessor ausgeführt wird, das Lasteinstellungsverfahren nach einem der Ansprüche 1 bis 10 implementiert.

**Revendications**

1. Procédé de réglage de charge, comprenant:

   acquérir (101, 201, 301) une valeur indicatrice d'un premier indicateur de performance d'une cellule massive à entrées et sorties multiples MIMO;
   déterminer (102, 202, 302) un état de charge de la cellule MIMO massive en fonction de la valeur du premier indicateur de performance; et
   déterminer et exécuter (103) une stratégie d'ajustement de la charge correspondant à l'état de charge de la cellule MIMO massive, la stratégie d'ajustement de la charge comprenant l'un des éléments suivants: migration d'un premier utilisateur d'une cellule voisine de la cellule MIMO massive dans la cellule MIMO massive, migration d'un deuxième utilisateur de la cellule MIMO massive dans une cellule voisine de la cellule MIMO massive, migration d'un premier utilisateur d'une cellule voisine de la cellule MIMO massive dans la cellule MIMO massive et migration d'un deuxième utilisateur de la cellule MIMO massive dans la cellule voisine, ou maintien d'un statu quo;
   dans lequel, lors de la migration du premier utilisateur de la cellule voisine dans la cellule MIMO massive, la cellule voisine est désignée comme une cellule présente et la cellule MIMO massive comme une cellule cible; et dans lequel, lors de la migration du second utilisateur de la cellule MIMO massive dans la cellule voisine, la cellule MIMO massive est désignée comme une cellule présente et la cellule voisine comme une cellule cible; et
   le premier utilisateur ou le second utilisateur est déterminé de la manière suivante:

   sélectionner (1001) N utilisateurs dans la cellule actuelle, N ≥ 1 et N étant prédéfini;
   mesurer (1002) un deuxième indicateur de performance de chacun des N utilisateurs sélectionnés dans la cellule cible pour obtenir une valeur d'indicateur du deuxième indicateur de performance; et
   en réponse à la valeur de l'indicateur du deuxième indicateur de performance supérieure à une valeur d'indicateur prédéfinie de la cellule cible, utiliser (1003) un utilisateur sélectionné dont la valeur de l'indicateur du deuxième indicateur de performance est supérieure à la valeur d'indicateur prédéfinie en tant que premier utilisateur ou deuxième utilisateur.

2. Procédé selon la revendication 1, dans lequel, lors de la migration du premier utilisateur de la cellule voisine dans la cellule MIMO massive, la sélection (1001) des N utilisateurs de la cellule actuelle comprend:

   sélectionner N utilisateurs parmi les utilisateurs ayant un volume de données sur la liaison descendante supérieur à un volume de données prédéfini dans la cellule actuelle; et
   dans lequel, lors de la migration du deuxième utilisateur de la cellule MIMO massive vers la cellule voisine, la sélection (1001) des N utilisateurs de la cellule actuelle comprend:
   classer, en fonction des valeurs d'efficacité spectrale SE, de petites à grandes, les utilisateurs ayant un nombre de temps de programmation de la répartition spatiale supérieur à un nombre de temps prédéfini et une proportion de programmation de la répartition spatiale supérieure à un premier seuil prédéfini dans la cellule actuelle, et sélectionner les N premiers utilisateurs dans le classement.

3. Procédé selon la revendication 1, après avoir déterminé et exécuté (103) la stratégie d'ajustement de la charge correspondant à l'état de charge de la cellule MIMO massive, comprend en outre:

   acquérir une valeur d'indicateur d'un troisième indicateur de performance; et
   mettre à jour la valeur de l'indicateur prédéfini de la cellule cible en fonction de l'état de charge et de la valeur de l'indicateur du troisième indicateur de performance.

4. Procédé selon l'une des revendications 1 à 3, dans lequel la détermination et l'exécution (103) de la stratégie d'ajustement de la charge en fonction de l'état de charge de la cellule MIMO massive comprend:

   interroger (203, 303) les niveaux d'excellence de plusieurs stratégies candidates d'ajustement de la charge dans l'état de charge de la cellule MIMO massive, un niveau d'excellence faisant référence à la qualité ou à la médiocrité d'une stratégie d'ajustement de la charge dans l'état de charge de la cellule MIMO massive; et
   sélectionner (204, 304), en fonction des niveaux d'excellence trouvés des multiples stratégies d'ajustement de charge candidates, l'une des multiples stratégies d'ajustement de charge candidates en tant que stratégie d'ajustement de charge correspondant à l'état de charge de la cellule MIMO massive et exécuter la stratégie d'ajustement de charge correspondant à l'état de charge de la cellule MIMO massive.

**5.** Procédé selon l'une des revendications 1 à 3, dans lequel la détermination et l'exécution (103) de la stratégie d'ajustement de la charge en fonction de l'état de charge de la cellule MIMO massive comprend:
utiliser, selon une correspondance prédéfinie entre les états de charge et les stratégies d'ajustement de la charge, une stratégie d'ajustement de la charge correspondant à l'état de charge de la cellule MIMO massive en tant que stratégie d'ajustement de la charge correspondant à l'état de charge de la cellule MIMO massive et exécuter la stratégie d'ajustement de la charge correspondant à l'état de charge de la cellule MIMO massive.

**6.** Procédé selon la revendication 5, dans lequel la correspondance prédéfinie entre les états de charge et les stratégies d'ajustement de la charge comprend:

dans le cas où l'état de charge de la cellule MIMO massive est tel qu'aucune situation de congestion ne se produit dans la cellule MIMO massive, la stratégie d'ajustement de la charge correspondant à l'état de charge de la cellule MIMO massive consiste à faire migrer le premier utilisateur de la cellule voisine dans la cellule MIMO massive; et
dans le cas où l'état de charge de la cellule MIMO massive est qu'une situation de congestion se produit dans la cellule MIMO massive, la stratégie d'ajustement de la charge correspondant à l'état de charge de la cellule MIMO massive consiste à faire migrer le deuxième utilisateur de la cellule MIMO massive vers la cellule voisine.

**7.** Procédé selon la revendication 2, dans lequel la sélection des N utilisateurs parmi les utilisateurs ayant un volume de données sur la liaison descendante supérieur au volume de données prédéfini dans la cellule actuelle comprend:
dans le cas où l'état de charge de la cellule MIMO massive est tel qu'aucune situation de congestion ne se produit dans la cellule MIMO massive et que l'état de charge de la cellule MIMO massive est relativement chargé, sélectionner les N utilisateurs parmi les utilisateurs dont le volume de données sur la liaison descendante est supérieur au volume de données prédéfini dans la cellule actuelle.

**8.** Procédé selon la revendication 4, après avoir sélectionné (204, 304), selon les niveaux d'excellence trouvés des multiples stratégies d'ajustement de charge candidates, l'une des multiples stratégies d'ajustement de charge candidates comme stratégie d'ajustement de charge correspondant à l'état de charge de la cellule MIMO massive et avoir exécuté la stratégie d'ajustement de charge correspondant à l'état de charge de la cellule MIMO massive, consiste en outre à:
mettre à jour (305) un niveau d'excellence, déterminé en fonction de l'état de charge de la cellule MIMO massive, de la stratégie d'ajustement de la charge correspondant à l'état de charge de la cellule MIMO massive.

**9.** Procédé selon la revendication 8, dans lequel la mise à jour (305) du niveau d'excellence, déterminé dans l'état de charge de la cellule MIMO massive, de la stratégie d'ajustement de la charge correspondant à l'état de charge de la cellule MIMO massive consiste à:

acquérir (3051) une valeur d'indicateur d'un quatrième indicateur de performance, dans lequel le quatrième indicateur de performance comprend un quatrième indicateur de performance de la cellule MIMO massive et un quatrième indicateur de performance de la cellule voisine; et
mettre à jour (3052), en fonction de la valeur de l'indicateur du quatrième indicateur de performance, le niveau d'excellence, déterminé dans l'état de charge de la cellule MIMO massive, de la stratégie d'ajustement de la charge correspondant à l'état de charge de la cellule MIMO massive.

**10.** Procédé selon la revendication 4, dans lequel la sélection (204, 304), selon les niveaux d'excellence trouvés des multiples stratégies d'ajustement de charge candidates, l'une des multiples stratégies d'ajustement de charge candidates en tant que stratégie d'ajustement de charge correspondant à l'état de charge de la cellule MIMO massive comprend:

déterminer (2041) une manière de sélectionner l'une des multiples stratégies candidates d'ajustement de la charge sur la base d'un algorithme $\varepsilon$ greedy, la manière comprenant une sélection aléatoire ou une sélection en fonction d'un niveau d'excellence; et
sélection (2042), selon la méthode de sélection, de la stratégie d'ajustement de la charge correspondant à l'état de charge de la cellule MIMO massive parmi les multiples stratégies d'ajustement de la charge candidates et exécution de la stratégie d'ajustement de la charge correspondant à l'état de charge de la cellule MIMO massive.

**11.** Serveur comprenant:

au moins un processeur (402); et

une mémoire (401) connectée de manière communicative à l'au moins un processeur;

dans lequel la mémoire (401) est configurée pour stocker une instruction exécutable par l'au moins un processeur pour permettre à l'au moins un processeur (402) d'exécuter le procédé de réglage de charge selon l'une des revendications 1 à 10.

12. Support de stockage lisible par ordinateur, stockant un programme informatique qui, lorsqu'il est exécuté par un processeur, met en œuvre le procédé de réglage de charge selon l'une des revendications 1 à 10.

Start

101

Acquire an indicator value of a first performance indicator of a massive MIMO cell

102

Determine a load state of the massive MIMO cell according to the indicator value of the first performance indicator

103

Determine and perform a load adjustment strategy matching the load state, where the load adjustment strategy includes one of the following: migrating a first user of a neighboring cell of the massive MIMO cell into the massive MIMO cell, migrating a second user in the massive MIMO cell into a neighboring cell, migrating a first user of a neighboring cell into the massive MIMO cell and migrating a second user in the massive MIMO cell out to the neighboring cell, or maintaining the status quo

End

**FIG. 1**

1001

Select N users from the present cell, where $N \geq 1$ and N is preset

1002

Measure a second performance indicator of each of the selected N users in the target cell so that an indicator value of the second performance indicator is obtained

1003

In response to the indicator value of the second performance indicator being greater than a preset indicator value of the target cell, use the selected user as the first user or the second user

**FIG. 2**

```
                        ┌─────────────┐
                        │    Start    │
                        └──────┬──────┘
                               │                                    201
            ┌──────────────────▼──────────────────────────────────┐ ╭╯
            │ Acquire an indicator value of a first performance indicator of a massive │
            │                      MIMO cell                        │
            └──────────────────┬──────────────────────────────────┘
                               │                                    202
            ┌──────────────────▼──────────────────────────────────┐ ╭╯
            │ Determine a load state of the massive MIMO cell according to the indicator │
            │          value of the first performance indicator     │
            └──────────────────┬──────────────────────────────────┘
                               │                                    203
            ┌──────────────────▼──────────────────────────────────┐ ╭╯
            │ Query excellence levels of multiple candidate load adjustment strategies │
            │ under the load state, where an excellence level refers to how good or bad a │
            │     load adjustment strategy is performed under the load state │
            └──────────────────┬──────────────────────────────────┘
                               │                                    204
            ┌──────────────────▼──────────────────────────────────┐ ╭╯
            │ Select, according to the found excellence levels of the multiple candidate │
            │ load adjustment strategies, one candidate load adjustment strategy as a load │
            │     adjustment strategy matching the load state, and perform the load │
            │          adjustment strategy matching the load state  │
            └──────────────────┬──────────────────────────────────┘
                               │
                        ┌──────▼──────┐
                        │     End     │
                        └─────────────┘
```

**FIG. 3**

```
                                                                    2041
            ┌──────────────────────────────────────────────────────┐ ╭╯
            │ Determine a manner for selecting the one candidate load adjustment │
            │ strategy based on an ε greedy algorithm, where the manner includes │
            │       random selection or selection according to an excellence level │
            └──────────────────┬───────────────────────────────────┘
                               │                                     2042
            ┌──────────────────▼───────────────────────────────────┐ ╭╯
            │ Select, according to the manner for selecting, the load adjustment strategy │
            │   matching the load state from the multiple candidate load adjustment │
            │ strategies, and perform the load adjustment strategy matching the load state │
            └──────────────────────────────────────────────────────┘
```

**FIG. 4**

Start

301

Acquire an indicator value of a first performance indicator of a massive MIMO cell

302

Determine a load state of the massive MIMO cell according to the indicator value of the first performance indicator

303

Query excellence levels of multiple candidate load adjustment strategies under the load state, where an excellence level refers to how good or bad a load adjustment strategy is performed under the load state

304

Select,according to the found excellence levels of the multiple candidate load adjustment strategies, one candidate load adjustment strategy as a load adjustment strategy matching the load state, and perform the load adjustment strategy matching the load state

305

Update the excellence level, determined under the load state, of the load adjustment strategy matching the load state

End

**FIG. 5**

3051

Acquire an indicator value of a fourth performance indicator, where the fourth performance indicator includes a fourth performance indicator of the massive MIMO cell and a fourth performance indicator of the neighboring cell

3052

Update the excellence level, determined under the load state, of the load adjustment strategy matching the load state according to the indicator value of the fourth performance indicator

**FIG. 6**

401

Memory

402

Processor

**FIG. 7**

**EP 4 156 769 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2941044 A1
- CN 105873132 A